# EUROPEAN PATENT SPECIFICATION

(11) **EP 2 123 201 B1**
(45) Date of publication and mention of the grant of the patent: **10.07.2013**
(21) Application number: 08425364.0
(22) Date of filing: 22.05.2008
(51) Int. Cl.: A47J 31/40

(54) **Automatic beverages dispenser with improved delivery device**
Automatischer Getränkespender mit verbesserter Abgabevorrichtung
Distributeur automatique de boissons doté d'un dispositif de distribution amélioré

(43) Date of publication of application: 25.11.2009
(73) Proprietor: Gruppo Cimbali S.p.A., 20082 Binasco (MI) (IT)
(72) Inventor: Sala, Dario, 20082 Binasco (MI) (IT)
(74) Representative: Perani, Aurelio

(56) References cited:
- EP-A- 1 852 044
- WO-A-2004/041043
- WO-A-2006/066339
- US-A- 4 688 474

## Description

The present invention relates to an automatic beverages dispenser equipped with an improved delivery device, according to the preamble of claim 1. One such dispenser is known by US4688474.
More precisely, the present invention relates to automatic dispensers where soluble powder may be drawn from suitable cartridges inserted in the dispenser itself.

Dispensers of this type, which have been developed in order to satisfy the need for practicality, flexibility and hygienic conditions, are designed so as to be able to receive, in suitable seats, which may also be situated externally, one or more cartridges containing the powder necessary for preparation of one or more different beverages; following selection by a user, one or more metering devices draw from the cartridge or cartridges a predetermined quantity of soluble powder and transfer it to a mixer where the powder is mixed with water (for example mains water) so as to produce the selected beverage which is then dispensed to the user.

In order to ensure trouble-free operation, the cartridges of the dispenser must therefore be replaced regularly; this operation must not be performed too early on, in order to avoid wastage of large quantities of powder, nor too late in time, in order to avoid an interruption in dispensing of beverages, due, for example, to shortage of powder.

In view of the state of the art described, the object of the present invention is to provide an automatic beverages dispenser of the cartridge type, which is able to optimise the frequency of replacement of the cartridges, resulting in more automated and more efficient management of the dispenser supplies and replenishing operations.

In accordance with the present invention, this object is achieved by means of a dispenser according to Claim 1.

The characteristic features and advantages of the present invention will become clear from the following detailed description of a practical embodiment provided by way of a non-limiting example with reference to the accompanying drawings in which:

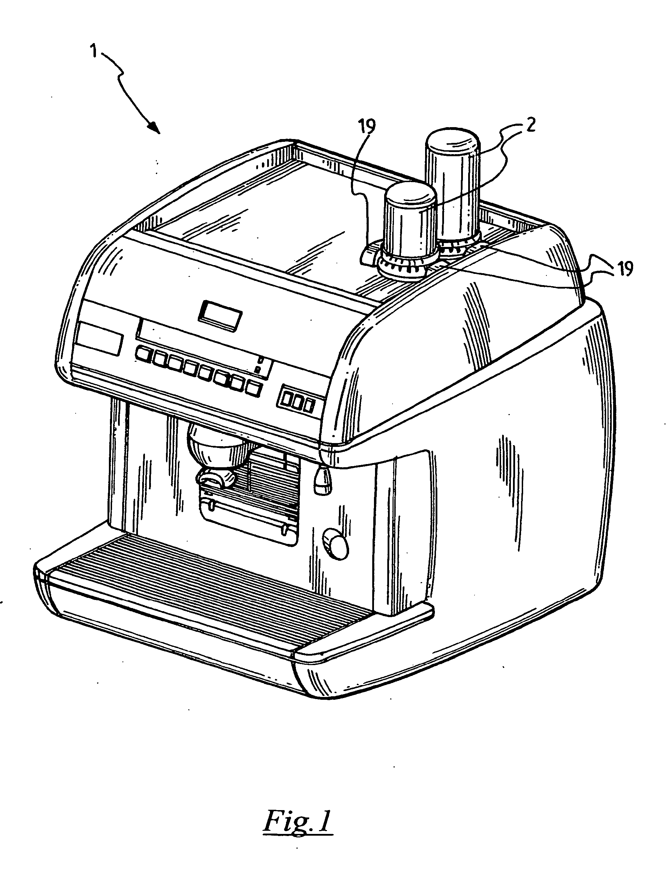

- Figure 1 shows a perspective view of an automatic dispenser of the cartridge type according to the present invention;
- Figure 2 shows, in schematic form, a cross-sectional view of the beverage preparation system of the dispenser according to Figure 1;
- Figure 3 shows a perspective view of a connector used in the dispenser according to Figure 1;
- Figure 4 shows a partially cut-away perspective view of the upper portion of the dispenser according to Figure 1.

With reference to the example shown in the figures, one or more cartridges 2 containing different types of soluble powder (for example coffee, milk or chocolate) are connected to the automatic dispenser 1. The cartridges 2 are preferably of the disposable type and each contain more than two measures of powder (i.e. are not designed for a single beverage, nor, for example, for a single double-shot coffee); advantageously the external profile of the dispenser 1 comprises external openings 3 for connecting the cartridges 2, advantageously situated outside the dispenser 1, with the interior of the dispenser 1 itself. Essentially each opening 3 defines a seat for a cartridge 2.

The powder inside the cartridges 2 therefore enters directly from the cartridge 2 into a feeder hopper 4 which communicates with the exterior of the dispenser 1 via the opening 3. Clearly, when the dispenser is not in use, namely when there is no cartridge 2 closing the opening 3, the latter may be closed by a suitable lid or the like. When, instead, at least one cartridge 2 is mounted on the dispenser 1, the cartridge 2 prevents the interior of the hopper 4 communicating with the external environment.

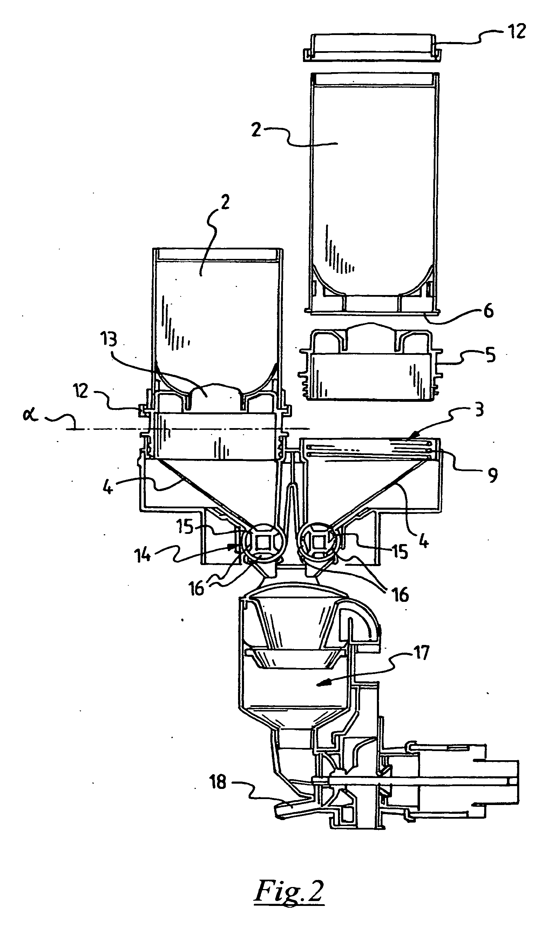

With reference to Figure 2, the cartridges 2 comprise, at the base, a closing element 6 (for example a pierceable membrane) designed for engagement with a suitable adaptor 5.

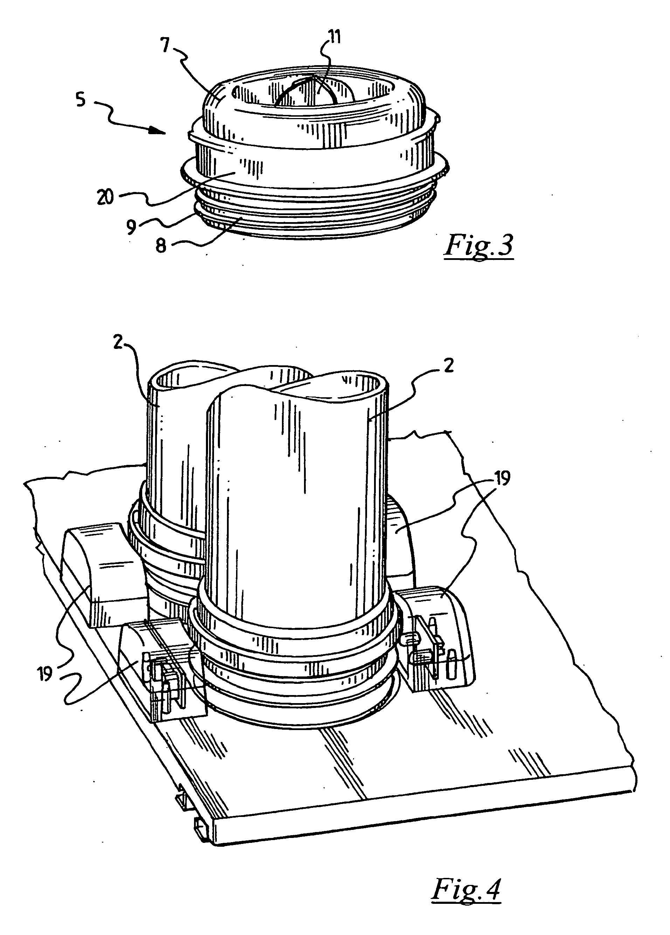

The adaptor 5, shown in Figure 3, comprises a first side 7, which is designed to mate with the cartridge 2, and a second side 8, which is situated opposite the first side and designed to mate with the external opening 3 of the hopper 4.

For example, the second side 8 may comprise an external thread 9 designed to mate with an internal thread 10 of the opening 3, while the first side may comprise a perforator 11 for perforating the closing element 6 of the cartridge 2.

Alternatively, the opening 3 may comprise directly fixing means for being fixed to the cartridge 2; in this case the adaptor 5 is no longer needed (or it may be regarded as being one piece with the opening 3 itself).

Fixing means 12 (shown as a ring in Figure 2) may, for example, allow the cartridge 2 to be locked with the adaptor 5.

The adaptor 5 comprises a passage 13 which connects the interior of the cartridge 2 with the hopper 4 of the metering device 14. The metering device 14 is known in the art and is shown, in the figures, as a wheel 15 comprising seats 16 which may vary in number, for example depending on the type of powder and the diameter of the wheel 15.

From the metering device 14, the powder is then introduced into a mixer 17 where it is mixed with the water in order to produce the required beverage.

The mixer 17 may have a known constructional design; it generally comprises a pipe for supplying water from a source, for example the external water mains, mixer means operated by motor means and a delivery device 18 (or dispensing device) for dispensing the beverage inside a container, for example a cup.

It is evident that, as soon as the closing element 6 of the cartridge 2 is pierced by the perforator 11, the soluble powder contained inside the cartridge 2 falls by means of gravity through the opening 3 into the hopper 4, filling it.

The volume of the hopper 4 is sufficient to hold a certain number of measures of soluble powder, preferably at least 10 measures and/or at least 10%, but preferably not more than half, of the measures contained inside the cartridge 2.

The dispenser 1 comprises detection means (visible in Figure 4), for example one or more sensors 19, which are able to detect the level of powder present in the dispenser 1.

In particular, the sensors 19 are able to detect whether the level of soluble powder has fallen below a predetermined sensing level, indicated schematically in Figure 2 by the plane α.

The sensors 19 may be of the capacitive or optical - preferably infrared - type.

The sensors 19 are advantageously arranged so that the plane α is situated in the vicinity of the opening 3, but below the plane reached by the bottom edge of the cartridge 2 when the latter is mounted on the dispenser 1.

In this way, when the sensors 19 detect the absence of soluble powder in the plane α, it is certain that the level of soluble powder has fallen below the plane α itself and that the cartridge 2 is therefore completely empty.

Preferably, the plane α may pass through the adaptor 5, for example through a smooth portion 20 thereof. Preferably, if the sensors 19 are optical sensors, they are connected to an adaptor 5 comprising, at least in the vicinity of the sensors 19, a portion which is sufficiently transparent to the sensor radiation; for example, the entire adaptor 5 may be made of a material (for example polymer material) which is as far as possible transparent to the infrared rays emitted by the sensors.

For example, the sensors 19 may be arranged on top of the external casing of the dispenser 1, in the vicinity of one or each opening 3 (or seat for the cartridge 2).

Alternatively, the sensors 19 may be mounted inset directly inside the adaptor 5; the adaptor 5, if it does not form one piece with the dispenser 1, will in this case comprise suitable means for controlling and managing the sensors 19 and/or means for connecting the sensors 19 to the remote components necessary for operation thereof.

The sensors 19 may be arranged facing each other, i.e. one acting as transmitter and the other as a receiver, or a single transceiver sensor 19 may be arranged opposite a reflecting component.

Alternatively, it is also conceivable to provide a single transceiver sensor 19 and provide a reflecting section, with a sufficient extension heightwise, in the zone of intersection between the plane α and the adaptor 5. In this way, by suitably directing the emitter, with the multiple reflections of the infrared rays emitted by a single emitter it is possible to cover substantially the entire plane α.

When the powder level is below the plane α (namely the powder is only inside the hopper 4), this means that the powder left inside the dispenser is sufficient for dispensing only a limited number of measures predefined by the volume of the hopper 4 and by the type of powder dispensed, i.e. by the volume of the seat 16 of the metering device.

The dispenser 1 may therefore comprise a counter, which is advantageously connected to the sensors 19 and/or to the metering device 15, in order to determine how many measures may still be dispensed before the reserve of powder contained inside the hopper 4 is completely used up.

When all the powder has been used up it is therefore possible to generate a disable signal which prevents the further dispensing of measures of beverage until a new cartridge 2 is mounted again on the dispenser.

This disable signal may be generated both by the counter and, for example, by further sensors (not shown) mounted on the bottom of the hopper 4.

When a new cartridge 2 is mounted on the dispenser 1, the soluble powder contained in it falls into the hopper 4, filling it until it passes beyond the plane α.

In fact, the volume of the hopper is such that the cartridge 2 does not manage to empty all the powder contained inside it into the hopper 4.

The sensors 19 therefore detect the presence of powder and reactivate dispensing of the beverage, if necessary zeroing the counter.

Obviously a person skilled in the art, in order to satisfy contingent and specific requirements, may make numerous modifications and variations to the configurations described above, all of which moreover are contained within the scope of protection of the invention as defined by the following claims.

## Claims

1. Automatic dispenser (1) for beverages produced from a soluble powder contained in cartridges (2), comprising:
- a hopper (4), comprising a top opening (3) in direct contact with the external environment, said top opening (3) being provided with connection means (9, 5) for connection to said cartridge (2), said connection means (9, 5) being designed to convey by means of gravity into said hopper (4) the powder contained in said cartridge (2);
- a metering device (15) designed to receive soluble powder from said hopper (4);
- a mixer (17) designed to receive the soluble powder from said metering device (15) and mix it with water in order to obtain the beverage;
- a delivery device (18) designed to draw the beverage produced in the mixer and dispense it into a container;
- said dispenser (1) comprising one or more sensors (19) designed to detect the presence and/or the absence of soluble powder in a sensing plane (α),
**characterized in that**
said sensing plane (α) is below the plane reached by the bottom edge of the cartridge (2) when the latter is mounted on the dispenser (1).

2. Dispenser (1) according to any one of the preceding claims, in which said sensors (19) are of the optical type.

3. Dispenser (1) according to the preceding claim, in which said sensors (19) are of the infrared type.

4. Dispenser (1) according to claim 1, in which said sensors (19) are of the capacitive type.

5. Dispenser (1) according to any one of the preceding claims, in which said sensors (19) are associated with means able to generate a disable signal for preventing dispensing of the beverages.

6. Dispenser (1) according to the preceding claim, in which said means able to generate a disable signal comprise a measure counter or a second group of sensors.

7. Dispenser (1) according to any one of the preceding claims, in which said sensors (19) are associated with means able to allow dispensing of the beverages when said sensors (19) detect the presence of powder in said sensing plane (α).

8. Dispenser (1) according to any one of the preceding claims, in which said connection means (9, 5) comprise an adaptor (5) designed to connect said cartridge (2) to said hopper (4) via said opening (3).

9. Dispenser (1) according to the preceding claim, in which said adaptor (5) is transparent to infrared rays.

10. Dispenser (1) according to any one of claims 8 or 9, in which said adaptor (5) is made of polymer material.

11. Dispenser (1) according to any one of claims 8 to 10, in which said adaptor comprises a first side (7) able to mate with said cartridge (2) and a second side (8) able to mate with said opening (3), said adaptor comprising a passage (13) able to connect the interior of said cartridge (2) with said hopper (4).

12. Dispenser (1) according to the preceding claim, in which said adaptor (5) has a vertical extension such that said sensing plane (α) is situated, during normal use, below the plane reached by the bottom edge of the cartridge (2) when the latter is mounted on the dispenser (1).

13. Dispenser (1) according to any one of claims 8 to 12, in which said adaptor (5) comprises a smooth portion (20) through which said sensing plane (α) passes.

14. Dispenser (1) according to any one of claims 8 to 13, in which said adaptor (5) forms one piece with said dispenser (1).

## Patentansprüche

1. Automatischer Spender (1) für Getränke, die aus einem löslichen Pulver hergestellt werden, das in Kartuschen (2) enthalten ist, umfassend:
- einen Trichter (4), der eine obere Öffnung (3) in direktem Kontakt mit der Umgebung umfaßt, wobei die obere Öffnung (3) mit Verbindungsmitteln (9, 5) zum Verbinden mit der Kartusche (2) versehen ist, wobei die Verbindungsmittel (9, 5) so ausgelegt sind, daß sie mittels Schwerkraft das in der Kartusche (2) enthaltene Pulver in den Trichter (4) befördern,
- eine Meßvorrichtung (15), die dazu ausgelegt ist, lösliches Pulver von dem Trichter (4) aufzunehmen,
- einen Mischer (17), der dazu ausgelegt ist, das lösliche Pulver von der Meßvorrichtung (15) aufzunehmen und es mit Wasser zu mischen, um das Getränk zu erhalten,
- eine Abgabevorrichtung (18), die dazu ausgelegt ist, das in dem Mischer hergestellte Getränk abzuziehen und in einen Behälter abzugeben,
- wobei der Spender (1) einen oder mehrere Sensor(en) (19) umfaßt, der/die dazu ausgelegt ist/sind, die Anwesenheit und/oder die Abwesenheit des löslichen Pulvers in einer Erfassungsebene (α) zu detektieren,
**dadurch gekennzeichnet, daß**
die Erfassungsebene (α) sich unterhalb der Ebene befindet, die durch die Unterkante der Kartusche (2) erreicht wird, wenn die letztere auf dem Spender (1) befestigt ist.

2. Spender (1) nach dem vorhergehenden Anspruch, wobei die Sensoren (19) vom optischen Typ sind.

3. Spender (1) nach dem vorhergehenden Anspruch, wobei die Sensoren (19) vom Infrarot-Typ sind.

4. Spender (1) nach Anspruch 1, wobei die Sensoren (19) vom kapazitiven Typ sind.

5. Spender (1) nach einem der vorhergehenden Ansprüche, wobei die Sensoren (19) Mitteln zugeordnet sind, die geeignet sind, ein Sperrsignal zum Verhindern einer Abgabe der Getränke zu generieren.

6. Spender (1) nach dem vorhergehenden Anspruch, wobei die Mittel, die geeignet sind, ein Sperrsignal zu generieren, einen Maßzähler oder eine zweite Gruppe von Sensoren umfassen.

7. Spender (1) nach einem der vorhergehenden Ansprüche, wobei die Sensoren (19) Mitteln zugeordnet sind, die geeignet sind, ein Abgeben der Getränke zu erlauben, wenn die Sensoren (19) die Anwesenheit von Pulver in der Erfassungsebene (α) detektieren.

8. Spender (1) nach einem der vorhergehenden Ansprüche, wobei die Verbindungsmittel (9, 5) einen Adapter (5) umfassen, der dazu ausgelegt ist, die Kartusche (2) mit dem Trichter (4) über die Öffnung (3) zu verbinden.

9. Spender (1) nach dem vorhergehenden Anspruch, wobei der Adapter (5) für Infrarot-Strahlen durchlässig ist.

10. Spender (1) nach einem der Ansprüche 8 oder 9, wobei der Adapter (5) aus Polymermaterial hergestellt ist.

11. Spender (1) nach einem der Ansprüche 8 bis 10, wobei der Adapter eine erste Seite (7), die mit der Kartusche (2) zusammenpaßt, und eine zweite Seite (8) umfaßt, die mit der Öffnung (3) zusammenpaßt, wobei der Adapter einen Durchlaß (13) umfaßt, der geeignet ist, das Innere der Kartusche (2) mit dem Trichter (4) zu verbinden.

12. Spender (1) nach dem vorhergehenden Anspruch, wobei der Adapter (5) eine vertikale Verlängerung aufweist, so daß die Erfassungsebene (α) während des normalen Gebrauchs unterhalb der Ebene angeordnet ist, die durch die Unterkante der Kartusche (2) erreicht wird, wenn die letztere auf dem Spender (1) befestigt ist.

13. Spender (1) nach einem der Ansprüche 8 bis 12, wobei der Adapter (5) einen glatten Abschnitt (20) umfaßt, durch den die Erfassungsebene (α) verläuft.

14. Spender (1) nach einem der Ansprüche 8 bis 13, wobei der Adapter (5) mit dem Spender (1) ein Stück bildet.

## Revendications

1. Distributeur automatique (1) pour boissons préparées à partir d'une poudre soluble contenue dans des cartouches (2), comprenant:
- un entonnoir (4) comprenant une ouverture supérieure (3) en contact direct avec l'environnement extérieur, ladite ouverture supérieure (3) étant pourvue de moyens de liaison (9, 5) pour une liaison à ladite cartouche (2), lesdits moyens de liaison (9, 5) étant adaptés pour acheminer par gravité, dans ledit entonnoir (4), la poudre contenue dans la cartouche (2),
- un dispositif de mesure (15) adapté pour recevoir de la poudre soluble dudit entonnoir (4),
- un mélangeur (17) adapté pour recevoir la poudre soluble dudit dispositif de mesure (15) et de la mélanger avec de l'eau afin d'obtenir la boisson,
- un dispositif de distribution (18) adapté pour soutirer la boisson préparée dans ledit mélangeur et pour distribuer celle-ci dans un récipient,
- ledit distributeur (1) comprenant un ou plusieurs capteur(s) (19) adapté(s) pour détecter la présence et/ou l'absence de la poudre soluble dans un plan de détection (α),
**caractérisé par le fait que**
le plan de détection (α) est situé au-dessous du plan atteint par le bord inférieur de la cartouche (2) lorsque cette dernière est montée sur le distributeur (1).

2. Distributeur (1) selon la revendication précédente, dans lequel lesdits capteurs (19) sont du type optique.

3. Distributeur (1) selon la revendication précédente, dans lequel lesdits capteurs (19) sont du type à infrarouge

4. Distributeur (1) selon la revendication 1, dans lequel lesdits capteurs (19) sont du type capacitif.

5. Distributeur (1) selon l'une quelconque des revendications précédentes, dans lequel lesdits capteurs (19) sont associés à des moyens aptes à générer un signal de refus pour empêcher une distribution des boissons.

6. Distributeur (1) selon la revendication précédente, dans lequel les moyens aptes à générer un signal de refus comprennent un compteur de mesures ou un deuxième groupe de capteurs.

7. Distributeur (1) selon l'une quelconque des revendications précédentes, dans lequel lesdits capteurs (19) sont associés à des moyens aptes à permettre une distribution des boissons lorsque les capteurs (19) détectent la présence de poudre dans ledit plan de détection (α).

8. Distributeur (1) selon l'une quelconque des revendications précédentes, dans lequel lesdits moyens de liaison (9, 5) comprennent un adaptateur (5) qui est adapté pour relier ladite cartouche (2) à l'entonnoir (4) via ladite ouverture (3).

9. Distributeur (1) selon la revendication précédente, dans lequel ledit adaptateur (5) est perméable aux rayons infrarouges.

10. Distributeur (1) selon l'une quelconque des revendications 8 ou 9, dans lequel ledit adaptateur (5) est réalisé en matière polymère.

11. Distributeur (1) selon l'une quelconque des revendications 8 à 10, dans lequel ledit adaptateur comprend un premier côté (7) apte à s'ajuster sur ladite cartouche (2) ainsi qu'un deuxième côté (8) apte à s'ajuster sur ladite ouverture (3), ledit adaptateur comprenant un passage (13) apte à relier l'intérieur de la cartouche (2) à l'entonnoir (4).

12. Distributeur (1) selon la revendication précédente, dans lequel ledit adaptateur (5) comprend une extension verticale telle que le plan de détection (α) est situé, durant l'usage normal, au-dessous du plan atteint par le bord inférieur de la cartouche (2) lorsque cette dernière est montée sur le distributeur (1).

13. Distributeur (1) selon l'une quelconque des revendications 8 à 12, dans lequel ledit adaptateur (5) comprend une portion lisse (20) par laquelle passe ledit plan de détection (α).

14. Distributeur (1) selon l'une quelconque des revendications 8 à 13, dans lequel ledit adaptateur (5) forme une seule pièce avec le distributeur (1).
